# EUROPEAN PATENT SPECIFICATION

(11) **EP 2 922 705 B1**
(45) Date of publication and mention of the grant of the patent: **20.11.2019**
(21) Application number: 13857422.3
(22) Date of filing: 29.10.2013
(51) Int. Cl.: B42D 15/00, G06K 19/02

(54) **TRANSACTION CARD**
TRANSAKTIONSKARTE
CARTE DE TRANSACTION

(30) Priority: 21.11.2012 US 201261729214 P; 14.03.2013 US 201313830623
(43) Date of publication of application: 30.09.2015
(73) Proprietor: Black Card LLC, Jackson, WY 83001 (US)
(72) Inventor: BLUM, Scott Alan, Wyoming 83001 (US)
(74) Representative: Budde Schou A/S
(86) International application number: PCT/US2013/067329
(87) International publication number: WO 2014/081541

(56) References cited:
- KR-A- 20110 088 256
- US-A- 5 601 931
- US-A- 5 601 931
- US-A1- 2007 096 457
- US-A1- 2009 078 776
- US-A1- 2010 116 891
- US-A1- 2011 239 886

## Description

### Technical Field

The present invention relates to transaction cards, such as credit cards and debit cards, that are used as substitutes for cash.

### Description of Related Art

The vast majority of transaction cards in use today are constructed of plastic. These cards tend to be flimsy and wear out or break easily.

US5601931 discloses a base layer that is made of wood pulp fibers with fibrous magnetic polymer element. US5601931 does not describe the use of metal flakes in the base. US2009078776 discloses a transaction card, but the card does not comprise metal flakes in the base.

### SUMMARY

The preferred embodiments of the present transaction card have several features, no single one of which is solely responsible for their desirable attributes. Without limiting the scope of the present embodiments as expressed by the claims that follow, their more prominent features will now be discussed briefly. After considering this discussion, and particularly after reading the section entitled "Detailed Description of the Preferred Embodiments," one will understand how the features of the present embodiments provide advantages, which include increased weight, enhanced feel, and high tech look.

One embodiment of the present carbon transaction card comprises a substantially planar sheet having a front surface, a back surface and a continuous peripheral edge. The planar sheet comprises a plurality of metal flakes suspended in a non-metallic matrix.

### BRIEF DESCRIPTION OF THE DRAWINGS

The preferred embodiments of the present invention will now be discussed in detail with an emphasis on highlighting the advantageous features. These embodiments depict the novel and non-obvious invention shown in the accompanying drawings, which are for illustrative purposes only. These drawings include the following figures, in which like numerals indicate like parts:
Figure 1 is a front elevation view of one embodiment of the present transaction card;
Figure 2 is a rear elevation view of the transaction card of Figure 1; and
Figure 3 is a detail view of the portion of the transaction card of Figure 1 indicated by the circle 3-3.

### DETAILED DESCRIPTION

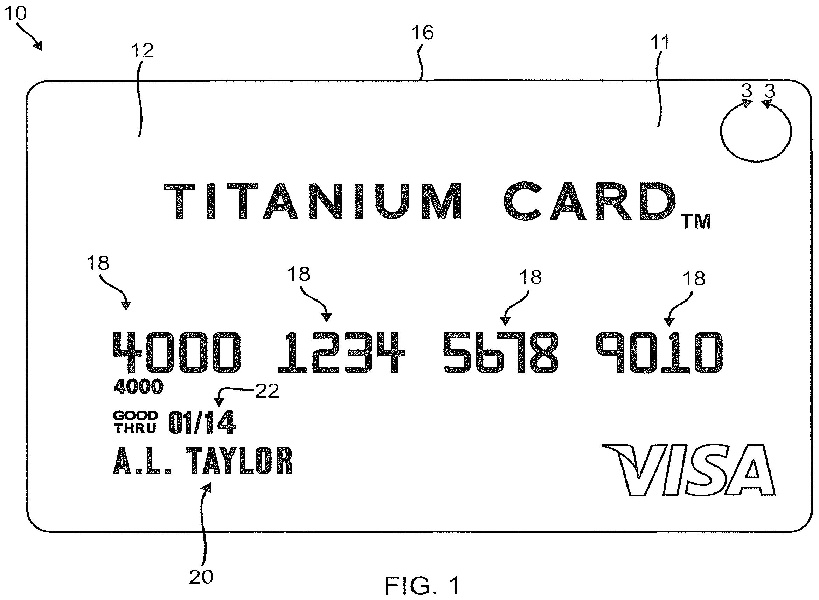

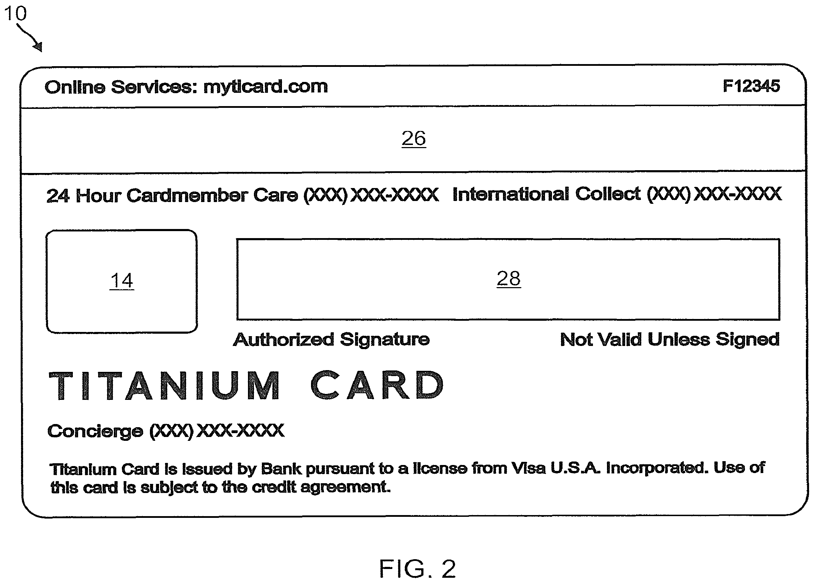

With reference to Figures 1 and 2, the present transaction card 10 is a substantially planar sheet 11 having a front surface 12 and a back surface 14. The card 10 includes a continuous peripheral edge 16, which in the illustrated embodiment is substantially rectangular. However, those of ordinary skill in the art will appreciate that the card 10 could have virtually any shape, such as square, round or hexagonal. The scope of the present card 10 is not limited to any particular shape.

In the illustrated embodiment, the transaction card 10 bears a number 18 (Figure 1) that identifies the card 10 as being associated with a particular account. In the illustrated embodiment, the account number 18 has sixteen digits. However, in alternative embodiments the card 10 may have fewer or more digits. The card 10 also bears the name 20 of the cardholder and an expiration date 22. In certain embodiments, the card 10 may also bear a year 24 or date on which the cardholder first acquired the card 10. The information displayed on the card 10 may be applied in a conventional manner, such as embossing and/or printing.

With reference to Figure 2, the back surface 14 of the present transaction card 10 includes a magnetic strip 26. The magnetic strip 26 stores information that is readable by a magnetic reader. For example, the magnetic strip 26 may contain a series of digits from which the magnetic card reader can obtain information about the account associated with the card 10 and/or the cardholder. The back surface 14 of the present transaction card 10 further includes a signature panel 28.

While not shown in the figures, other embodiments of the present transaction card 10 may include additional features, such as an embedded microchip, a holographic image, etc. The card 10 may further include one or more transparent portions. Such transparent portions may include one or more optically recognizable layers or infrared-blocking ink to allow the transparent portion(s) to be recognized by an optical card reader. These additional features may allow the transaction card 10 to function more easily, efficiently, and/or more securely.

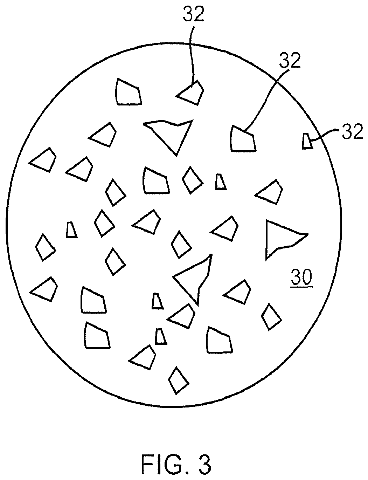

With reference to Figure 3, the planar sheet 11 comprises a matrix 30 in which a plurality of metal flakes 32 are suspended or embedded. The metal flakes 32 may have any size and packing density. Figure 3 is not intended to be drawn to scale.

The matrix 30 may comprise any non-metallic material, such as a polymer. A non-exhaustive and non-limiting list of example polymers includes polyethylene, polyethylene terephthalate, polypropylene, polystyrene, polytetrafluoroethylene, polyvinylchloride (PVC), polychlorotritluoroethylene, polyacrylonitrile, polychloroprene, polyurethane, polyamide (nylon), and polyacrylamide. Other example material for the matrix 30 include carbon, carbon graphite, or carbon fiber. The metal flakes 32 may comprise any metal and/or metal alloy. The metal flakes 32 may also comprise a mixture in which some particles are a first metal or alloy and some particles are a second metal or alloy, or a third or fourth etc. metal or alloy. A non-exhaustive and non-limiting list of example metals and metal alloys includes scandium, titanium, vanadium, chromium, manganese, iron, cobalt, nickel, copper, zinc, yttrium, zirconium, niobium, molybdenum , technetium, ruthenium , rhodium, palladium, silver, cadmium, hafnium , tantalum, tungsten, rhenium, osmium, iridium, platinum, gold, aluminum, gallium, indium, thallium, lead, bismuth, tin, stainless steel, bronze, brass, and any combination(s) of the foregoi ng.

The vast majority of today's transaction cards are constructed of plastic. The present transaction card 10 is advantageously is heavier than a typical transaction card due to its metal content. The additional weight gives the card greater heft, which many consumers may find attractive. In addition to these benefits, the metal flakes 32 provide the card 10 with a unique feel and high tech look. The card 10 is thus more desirable for its distinctiveness over a typical plastic card.

The invention is not limited to the particular embodiments disclosed.

## Claims

1. A transaction card (10), consisting of:
a planar sheet (11) having a front surface (12), a back surface (14) and a continuous peripheral edge (16);
wherein the planar sheet (11) comprises a non-metallic matrix (30), throughout which a plurality of metal flakes (32) are suspended;
wherein the matrix (30) includes at least one of carbon, carbon graphite, and carbon fiber, and **characterised in that**
the metal flakes (32) comprise a mixture of flakes of a first metal and flakes of a second, different metal.

2. The transaction card (10) of claim 1, further **characterised in that** the metal flakes (32) comprise a mixture of flakes (32) of a first metal alloy and flakes (32) of a second, different metal alloy.

3. The transaction card (10) of claim 1, further **characterised in that** the metal flakes (32) comprise a mixture of flakes (32) of said first metal and flakes (32) of a metal alloy.

4. A process of making a transaction card (10), the process comprising:
forming a non-metallic matrix (30) into a planar sheet (11) configured as a card (10) having a front surface (12) and a back surface (14), wherein the matrix (30) includes at least one of carbon, carbon graphite, and carbon fiber;
embedding metal flakes (32) in the non-metallic matrix (30) throughout the planar sheet (11), wherein the metal flakes (32) are embedded non-uniformly;
applying an account number (18) to the front surface (12) of the card (10);
applying a name (20) and an expiration date (22) to the front surface (12) of the card (10); and
applying a magnetic strip (26) to the back surface (14) of the card (10), the magnetic strip (26) storing information that is readable by a magnetic reader, and **characterised in that**
the metal flakes (32) comprise a mixture of flakes of a first metal and flakes of a second, different metal.

5. The process of claim 4, further **characterised in that** the account number (18) is applied to the front surface (12) of the card is by at least one of embossing and printing.

6. The process of claim 4, further **characterised in that** the metal flakes (32) comprise a mixture of flakes (32) of a first metal alloy and flakes (32) of a second, different metal alloy.

7. The process of claim 4, further **characterised in that** the metal flakes (32) comprise a mixture of flakes of said first metal and flakes of a metal alloy.

## Patentansprüche

1. Transaktionskarte (10), bestehend aus:
einem ebenen Blatt (11) mit einer Vorderseite (12), einer Rückseite (14) und einer durchgehenden Umfangskante (16);
wobei das ebene Blatt (11) eine nichtmetallische Matrix (30) umfasst, über die eine Vielzahl von Metallflocken (32) ausgebreitet sind;
wobei die Matrix (30) Kohlenstoff und/oder Kohlenstoffgraphit und/oder Kohlenstofffaser enthält, und **dadurch gekennzeichnet ist, dass**
die Metallflocken (32) eine Mischung von Flocken aus einem ersten Metall und Flocken aus einem zweiten, unterschiedlichen Metall umfassen.

2. Transaktionskarte (10) nach Anspruch 1, ferner **dadurch gekennzeichnet, dass** die Metallflocken (32) eine Mischung von Flocken (32) aus einer ersten Metalllegierung und Flocken (32) aus einer zweiten, unterschiedlichen Metalllegierung umfassen.

3. Transaktionskarte (10) nach Anspruch 1, ferner **dadurch gekennzeichnet, dass** die Metallflocken (32) eine Mischung von Flocken (32) aus dem ersten Metall und Flocken (32) aus einer Metalllegierung umfassen.

4. Verfahren zur Herstellung einer Transaktionskarte (10), wobei das Verfahren umfasst:
die Bildung einer nichtmetallischen Matrix (30) in ein ebenes Blatt (11) hinein, das als eine Karte (10) mit einer Vorderseite (12) und einer Rückseite (14) gestaltet ist, wobei die Matrix (30) Kohlenstoff und/oder Kohlenstoffgraphit und/oder Kohlenstofffaser enthält;
die Einbettung von Metallflocken (32) in die nichtmetallische Matrix (30) hinüber das ebene Blatt (11), wobei die Metallflocken (32) ungleichmässig eingebettet sind;
die Einsetzung einer Kontonummer (18) auf die Vorderseite (12) der Karte (10);
die Einsetzung eines Namens (20) und eines Verfallsdatums (22) auf die Vorderseite (12) der Karte (10); und
die Einsetzung eines Magnetstreifens (26) auf die Rückseite (14) der Karte (10), wobei der Magnetstreifen (26) Daten speichert, die durch einen Kartenleser lesbar sind, und **dadurch gekennzeichnet, dass** die Metallflocken (32) eine Mischung von Flocken aus einem ersten Metall und Flocken aus einem zweiten, unterschiedlichen Metall umfassen.

5. Verfahren nach Anspruch 4, ferner **dadurch gekennzeichnet, dass** die Kontonummer (18) auf die Vorderseite (12) der Karte durch Prägung und/oder Drucken eingesetzt wird.

6. Verfahren nach Anspruch 4, ferner **dadurch gekennzeichnet, dass** die Metallflocken (32) eine Mischung von Flocken (32) aus einer ersten Metalllegierung und Flocken (32) aus einer zweiten, unterschiedlichen Metalllegierung umfassen.

7. Verfahren nach Anspruch 4, ferner **dadurch gekennzeichnet, dass** die Metallflocken (32) eine Mischung von Flocken aus dem ersten Metall und Flocken aus einer Metalllegierung umfassen.

## Revendications

1. Carte de transaction (10) consistant en:
une feuille plane (11) ayant une surface avant (12), une surface arrière (14) et un bord périphérique continu (16);
où la feuille plane (11) comprend une matrice non métallique (30), à travers laquelle une pluralité de paillettes métalliques (32) sont suspendues;
où la matrice (30) inclut au moins une de carbone, de graphite de carbone, et de fibre de carbone, et **caractérisée en ce que**
les paillettes métalliques (32) comprennent un mélange de paillettes d'un premier métal et de paillettes d'un deuxième métal différent.

2. Carte de transaction (10) selon la revendication 1, en outre **caractérisée en ce que** les paillettes métalliques (32) comprennent un mélange de paillettes (32) d'un premier alliage métallique et des paillettes (32) d'un deuxième alliage métallique différent.

3. Carte de transaction (10) selon la revendication 1, en outre **caractérisée en ce que** les paillettes métalliques (32) comprennent un mélange de paillettes (32) dudit premier métal et de paillettes (32) d'un alliage métallique.

4. Processus de fabrication d'une carte de transaction (10), le processus comprenant:
la mise en forme d'une matrice non métallique (30) en une feuille plane (11) configurée comme une carte (10) ayant une surface avant (12) et une surface arrière (14), où la matrice (30) inclut au moins une de carbone, de graphite de carbone, et de fibre de carbone;
l'incorporation de paillettes métalliques (32) dans la matrice non métallique (30) à travers la feuille plane (11), où les paillettes métalliques (32) sont incorporées de manière non-uniforme;
l'application d'un numéro de compte (18) sur la surface avant (12) de la carte (10);
l'application d'un nom (20) et d'une date d'expiration (22) sur la surface avant (12) de la carte (10); et
l'application d'une bande magnétique (26) sur la surface arrière (14) de la carte (10), étant donné que la bande magnétique (26) enregistre l'information qui est lisible par un lecteur de carte magnétique, et **caractérisé en ce que**
les paillettes métalliques (32) comprennent un mélange d'un premier métal et des paillettes d'un deuxième métal différent.

5. Processus selon la revendication 4, en outre **caractérisé en ce que** le numéro de compte (18) est appliqué sur la surface avant (12) de la carte par au moins un gaufrage et une impression.

6. Processus selon la revendication 4, en outre **caractérisé en ce que** les paillettes métalliques (32) comprennent un mélange de paillettes (32) d'un premier alliage métallique et des paillettes (32) d'un deuxième alliage métallique différent.

7. Processus selon la revendication 4, en outre **caractérisé en ce que** les paillettes métalliques (32) comprennent un mélange de paillettes dudit premier métal et des paillettes d'un alliage métallique.
